**Europäisches Patentamt**

(19) **European Patent Office**

**Office européen des brevets**

(11) Veröffentlichungsnummer: **0 073 260**
**B1**

(12) **EUROPÄISCHE PATENTSCHRIFT**

(45) Veröffentlichungstag der Patentschrift:
14.10.87

(21) Anmeldenummer: **81106766.9**

(22) Anmeldetag: **29.08.81**

(51) Int. Cl.⁴: **F 24 J 2/24,** F 24 J 2/42,
**F 28 F 3/12,** F 28 F 1/32

(54) Vorrichtung zur Nutzung von Umgebungsenergie.

(43) Veröffentlichungstag der Anmeldung:
**09.03.83 Patentblatt 83/10**

(45) Bekanntmachung des Hinweises auf die Patenterteilung:
**14.10.87 Patentblatt 87/42**

(84) Benannte Vertragsstaaten:
**AT BE CH FR GB IT LI NL SE**

(56) Entgegenhaltungen:
**EP-A-0 016 370**
**DE-A-2 907 767**
**DE-A-3 004 398**
**US-A-4 002 159**
**US-A-4 014 313**

(73) Patentinhaber: **Kabel- und Metallwerke Gutehoffnungshütte Aktiengesellschaft, Klosterstrasse 29 Postfach 3320, D-4500 Osnabrück (DE)**

(72) Erfinder: **Busch, Michael, Dipl.- Ing., Wilhelm-Busch- Strasse 6, D-3000 Hannover (DE)**
Erfinder: **Moser, Gerd, Nelkenstrasse 12, D-3204 Nordstemmen 1 (DE)**
Erfinder: **Mannaerts, Klaus, Am Kindergarten 20, D-3165 Hänigsen (DE)**

(74) Vertreter: **Mende, Eberhard, Dipl.- Ing., Im Hespe 42, D-3008 Garbsen 4 (DE)**

EP 0 073 260 B1

## Beschreibung

Die Erfindung betrifft eine Vorrichtung zur Nutzung von Umgebungsenergie zu Heizzweckenmittels einer Wärmepumpenanlage, bei welcher in einem der Atmosphäre ausgesetzten Wärmetauscher das Arbeitsmedium durch die Umgebungsenergie erwärmt und ggf. verdampft wird und die dabei aufgenommene Energie durch den Wärmepumpenprozeß ausgenutzt wird und der Wärmetauscher aus mindestens zwei im wesentlichen horizontal übereinander angeordneten Platten aus Metallblech mit mehreren in Kontakt mit den Platten stehenden Kanälen zur Führung des Arbeitsmediums besteht.

Durch die zunehmende Verknappung und Verteuerung von Primärenergie wie Erdöl, Erdgas usw. gewinnt die Ausnutzung von Niedertemperaturwärme oder Abwärme aus der Umgebungsluft und der Globalstrahlung zunehmend an Bedeutung.

Man hat deshalb bereits vorgeschlagen, das Dach des zu beheizenden Gebäudes als Wärmetauscher auszubilden, beispielsweise in Form von Kupferblechen, in denen Rohrkanäle integriert sind, die von einem Arbeitsmittel durchströmt sind. Da das Arbeitsmittel, im Normalfall ist dies eine Sole, eine Temperatur unterhalb der Umgebungstemperatur hat, kann es zu einer Schwitzwasserbildung kommen, welche eine aufwendige Unterkonstruktion für das Dach notwendig macht. Derartige Anlagen die mit einer Wärmepumpe arbeiten ermöglichen die Beheizung des Gehäuses bei Außentemperaturen von bis zu -2° C. Bei niedrigeren Temperaturen sollte mit einem Zwischenspeicher oder aber bivalent, d. h. mit einer Zusatzheizung gearbeitet werden. Dennoch sind derartige Heizungsanlagen geeignet, den Verbrauch von Primärenergie gegenüber herkömmlichen Öl- oder Gasheizungsanlagen um bis zu 70 % zu senken.

In der DE-A1-30 04 398 Seite 6, Zeile 28 bis Seite 7, Zeile 15 ist eine Vorrichtung zur Aufnahme von Umgebungswärme zum Betrieb einer Wärmepumpe beschrieben bei der der Wärmetauscher aus einem Lamellenpaket besteht. Die Absorberflächen der einzelnen Lamellen sind durch Bleche gebildet in welche die durchströmten Rohre integriert bzw. eingelegt sind. Bei diesem Wärmetauscher wirkt sich nachteilig aus, daß bei horizontaler Anordnung des Lamellenpaketes die Wärmeleistung der Lamellen von oben nach unten abnimmt da nur die oberen Lamellen mit Wärmestrahlung beaufschlagt werden.

Von daher bestand die Aufgabe der Erfindung darin diese bekannte Vorrichtung dahingehend zu verbessern die Wärmeaufnahme wesentlich zu erhöhen, ohne die Wirtschaftlichkeit derartiger Vorrichtungen in Frage zu stellen.

Diese Aufgabe wird bei einer Vorrichtung der eingangs erwähnten Art dadurch gelöst, daß die Kanäle innerhalb der Platte nahtlos integriert sind und in Längsrichtung der Platte verlaufen, daß die Platten in Querrichtung der Kanäle gewölbt oder dachartig und/oder geneigt zur Horizontalen ausgebildet sind und der Abstand zweier benachbarter Platten an jeder Stelle nahezu gleich ist und mindestens 100 mm beträgt. Neben den sich aus der Aufgabenstellung direkt ergebenden Vorteilen zeigt die Vorrichtung gemäß der Lehre der Erfindung noch den Vorteil, daß die Luft zwischen zwei Platten bei jeder Windrichtung umgewälzt wird. Die Wölbung und/oder Neigung der Platten bewirkt, daß die abgekühlte Luft leichter nach unten abströmen kann. Darüber hinaus hat die Wölbung oder die dachartige Ausbildung der Platten noch den Vorteil, daß durch die Wölbung oder die dachartige Ausbildung eine Längenänderung der Platten in dieser Richtung kompensiert werden kann. Durch die Wölbung und Neigung der Platten ergibt sich weiterhin ein Vorteil, der darin zu sehen ist, daß ein Schneebelag von der obersten Platte sowie bei tiefen Außentemperaturen und hoher Luftfeuchtigkeit an den übrigen Platten entstehende Reif- bzw. Eisschichten leicht abrutschen können.

Der Neigungswinkel sollte 5 bis 25° betragen wogegen der Krümmungsradius der Wölbung zwischen 0,5 und 5 m beträgt. Die zwischen den Kanälen liegenden Bereiche der Platte sollten mit einer Profilierung versehen sein um deren Oberfläche zu vergrößern und damit den Wärmetauscher noch kompakter zu gestalten. Nach einer besonders günstigen Ausgestaltung des erfindungsgemäßen Wärmetauschers sind die übereinandergelegenen Kanäle zweier Platten durch Rohrstücke verbunden und durchströmt das Arbeitsmittel die übereinandergelegenen Kanäle der Platten nacheinander. Die Länge und die Anzahl der Platten sind dabei so ausgelegt daß bei der niedrigsten Arbeitstemperatur von ca. -2° C der Strömungsweg des Arbeitsmittels gerade ausreicht um dieses genügend zu erwärmen. Während bei einer dachseitigen Anordnung des Wärmetauschers Kältemittel nicht erlaubt sind und mit Sole gearbeitet werden muß, ist der Wärmetauscher gemäß der Lehre der Erfindung für beide Arbeitsmittel einsetzbar. Insbesondere für den Fall daß das Arbeitsmittel das Kältemittel der Wärmepumpenanlage ist wird dieses über einen Verteiler in die Kanäle der obersten Platte eingespeist und aus der untersten Platte herausgeleitet und über einen Sammler dem Kompressor zugeführt. Durch das Einleiten des Arbeitsmittels in die obersten Platten wird eine zu große Überhitzung des Kältemittels vermieden. Soll der Wärmetauscher mit Sole betrieben werden so ist es zweckmäßig den Strömungsverlauf der Sole umschaltbar zu gestalten. Bei erhöhtem Strahlungseinfall bzw. bei einer erhöhten Temperatur der obersten PPlatte sollte die Einspeisung von unten geschehen um die Energieaufnahme zu optimieren. Sowohl zwischen dem Verteiler und den Enden der Kanäle der obersten Platte als auch zwischen den Enden der Kanäle der untersten Platte und dem Sammler sind Rohre gleicher Länge vorgesehen. Dies ist die einfachste Ausführung um zu gewährleisten, die Strömungsgeschwindigkeit in jedem der parallel zueinander verlaufenden Kanäle gleich groß zu machen. Die Platten sind durch vertikal angeordnete Streben die durch Bohrungen in der Nähe der parallel zu den Kanälen verlaufenden Längskanten hindurchgeführt sind gehalten und durch über die Streben geschobene Distanzhülsen zueinander in Abstand gehalten. Dabei sind zumindest einige der Streben in Langlöchern angeordnet so daß Längenänderungen der Platten ohne weiteres möglich sind. Da die Platten zweckmäßigerweise aus Kupferblech wegen des hohen Wärmeleitvermögens hergestellt sind ist unterhalb des Wärmetauschers eine dichte Wanne, vorzugsweise aus Kupferblech angeordnet, die das anfallende Kondenswasser, welches Kupferionen enthalten kann auffängt. Der Wärmetauscher und die übrigen Teile der Wärmepumpe können an einem geeigneten Ort außerhalb des zu beheizenden Gebäudes, zum Beispiel im Garten oder im Hof aufgestellt werden. Der Installateur braucht nur den Wärmetauscher an die Wärmepumpenanlage anzuschließen und im Falle einer elektrisch betriebenen Wärmepumpe den elektrischen Anschluß herzustellen.

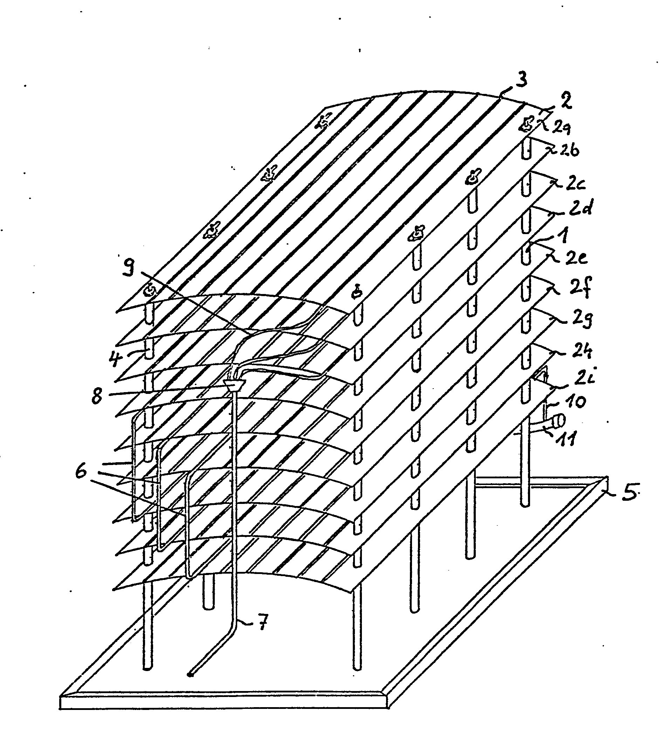

Die Erfindung ist anhand des in der Figur schematisch dargestellten Ausführungsbeispiels näher erläutert.

Auf in einem nicht näher bezeichneten Gerüst befestigten vertikal angeordneten Streben 1 sind mehrere Platten 2 aus Metallblech gehalten. Diese Platten 2 bestehen aus relativ dünnwandigem Kupferblech von beispielsweise 0,5 bis 1 mm, in welches Kanäle 3 nahtlos integriert sind. Die Platten 2 im Ausführungsbeispiel sind dies neun (2a bis 2i) sind übereinander in einem Abstand von ca. 150 mm angeordnet. Für die Abstandshalterung sorgen über die Streben 1 geschobene Distanzhülsen 4. Die Platten 2 sind gewölbt und in Längsrichtung der Kanäle 3 geneigt ausgeführt. Unterhalb der Platten 2a bis 2i ist eine Wanne 5 aus Kupferblech vorgesehen in welcher ggf. herabtropfendes Kondenswasser gesammelt wird um das Eindringen von Kupferionen in das Erdreich zu verhindern.

Das Arbeitsmittel wird den Kanälen 3 der Platten 2a, 2b und 2c von der Vorlaufleitung 7 über einen Verteiler 8 und Zuführungsleitungen 9 zugeführt und wird über nicht sichtbare Rohrbögen 6 den Platten 2d, 2e und 2f und von dort über gleich geartete Rohrbögen 6 den Platten 2g, 2h und 2i zugeleitet und gelangt von dort über Zuführungsleitungen 10 in einen Sammler 11 und von dort in die nicht dargestellte Rücklaufleitung der Wärmepumpenanlage. Die Länge der Zuführungsleitungen 9 und 10 sowie der Rohrbögen 6 soll so abgestimmt sein daß der Strömungsverlust des Arbeitsmittels auf seinem Weg durch die Zuführungsleitungen 9 die Kanäle 3 der Platten 2a bis 2c, die Rohrbögen 6 die Kanäle 3 der Platten 2d bis 2f die Rohrbögen 6 die Kanäle 3 der Platten 2g bis 2i und die Zuleitungen 10 gleich ist um eine gleichmäßige Durchströmung der Kanäle 3 sicherzustellen. Die Einspeisung des Arbeitsmittels in die oberen Platten 2a bis 2c hat sich für den Betrieb mit Kältemittel als vorteilhaft erwiesen da somit nahezu sichergestellt ist daß das Kältemittel nicht zu stark überhitzt wird. Für Solebetrieb hat sich insbesondere bei erhöhtem Strahlungseinfall bzw. erhöhter Temperatur der obersten Platte eine Einspeisung von unten als vorteilhafter erwiesen. Die übrigen Teile der Wärmepumpenanlage sind entweder innerhalb des durch die Streben 1 abgedeckten Bereiches oder in unmittelbarer Nähe des Wärmetauschers angeordnet, so daß der Installateur lediglich den Wärmetauscher an die Wärmepumpe und ggf. den elektrischen Anschluß für die Wärmepumpenanlage herzustellen hat.

**Patentansprüche**

1. Vorrichtung zur Nutzung von Umgebungsenergie zu Heizzwecken mittels einer Wärmepumpenanlage, bei welcher in einem der Atmosphäre ausgesetzten Wärmetauscher das Arbeitsmedium durch die Umgebungsenergie erwärmt und ggf. verdampft wird und die dabei aufgenommene Energie durch den Wärmepumpenprozeß ausgenutzt wird und der Wärmetauscher aus mindestens zwei im wesentlichen horizontal übereinander angeordneten Platten aus Metallblech mit mehreren in Kontakt mit den Platten stehenden Kanälen zur Führung des Arbeitsmediums besteht, dadurch gekennzeichnet, daß die Kanäle (3) innerhalb der Platte (2) nahtlos integriert sind und in Längsrichtung der Platte (2) verlaufen, daß die Platten (2) in Querrichtung der Kanäle (3) gewölbt oder dachartig und/oder geneigt zur Horizontalen ausgebildet sind und der Abstand zweier benachbarter Platten (2) an jeder Stelle nahezu gleich ist und mindestens 100 mm beträgt.

2. Vorrichtung nach Anspruch 1, dadurch gekennzeichnet, daß der Neigungswinkel zwischen 5 und 25° beträgt.

3. Vorrichtung nach Anspruch 1 oder 2, dadurch gekennzeichnet, daß der Krümmungsradius der Wölbung zwischen 0,5 und 5 m beträgt.

4. Vorrichtung nach Anspruch 1 oder einem der folgenden, dadurch gekennzeichnet, daß die zwischen den Kanälen (3) liegenden Bereiche der Platten (2) mit einer Profilierung versehen sind.

5. Vorrichtung nach Anspruch 1 oder einem der folgenden, dadurch gekennzeichnet, daß die übereinandergelegenen Kanäle (3) zweier Platten (2) durch Rohrstücke (6) verbunden sind und das Arbeitsmittel die übereinandergelegenen Kanäle (3) der Platten (2) nacheinander durchströmt.

6. Vorrichtung nach Anspruch 5, dadurch gekennzeichnet, daß das Arbeitsmittel das Kältemittel der Wärmepumpenanlage ist und über einen Verteiler (8) in die Kanäle (3) der obersten Platte (2) eingespeist und aus der untersten Platte (2) herausgeleitet und über einen Sammler (11) dem Kompressor zugeführt ist.

7. Vorrichtung nach Anspruch 6, dadurch gekennzeichnet, daß sowohl zwischen dem Verteiler (8) und den Enden der Kanäle (3) der obersten Platte (2) als auch zwischen den Enden der Kanäle (3) der untersten Platte (2) und dem Sammler (11) Rohre (9, 10) gleicher Länge vorgesehen sind.

8. Vorrichtung nach Anspruch 1 oder einem der folgenden, dadurch gekennzeichnet, daß die Platten (2) durch vertikal angeordnete Streben (1), die durch Bohrungen in der Nähe der parallel zu den Kanten verlaufenden Längskanten hindurchgeführt sind, gehaltert sind und durch über die Streben (1) geschobene Distanzhülsen (4) zueinander in Abstand gehalten sind.

9. Vorrichtung nach Anspruch 8, dadurch gekennzeichnet, daß zumindest einige der Streben (1) in Langlöchern angeordnet sind.

10. Vorrichtung nach Anspruch 1 oder einem der folgenden, dadurch gekennzeichnet, daß unterhalb des Wärmetauschers eine dichte Wanne (5), vorzugsweise aus Kupferblech, angeordnet ist.

**Claims**

1. Device for utilizing ambient energy for heating purposes by means of a heat-pump system, in which the working medium is heated by the ambient energy and, if appropriate, evaporated in a heat exchanger exposed to the atmosphere, the energy absorbed thereby is utilized by the heat-pump process, and the heat exchanger consists of at least two plates arranged essentially horizontally above one another and made of sheet metal, with several conduits in contact with the plates and intended for guiding the working medium, characterized in that the conduits (3) are incorporated seamlessly within the plate (2) and extend in the longitudinal direction of the plate (2), in that the plates (2) are made arched or roof-like and/or inclined relative to the horizontal in the transverse direction of the conduits (3), and in that the distance between two adjacent plates (2) at any point is virtually the same and amounts to at least 100 mm.

2. Device according to Claim 1, characterized in that the angle of inclination is between 5 and 25°.

3. Device according to Claim 1 or 2, characterized in that the radius of curvature of the arch is between 0,5 and 5 m.

4. Device according to Claim 1 or one of the following claims, characterized in that the regions of the plates (2) located between the conduits (3) are provided with profiling.

5. Device according to Claim 1 or one of the following claims, characterized in that the conduits (3) lying above one another and belonging to two plates (2) are connected by means of pipe sections (6), and the working medium flows successively through the conduits (3) lying above one another and provided in the plates (2).

6. Device according to Claim 5, characterized in that the working medium is the coolant of the heat-pump system and is fed into the conduits (3) of the uppermost plate (2) via a distributor (8), conveyed out of the bottommost plate (2) and supplied to the compressor via a collector (11).

7. Device according to Claim 6, characterized in that pipes (9, 10) of equal length are provided both between the distributor (8) and the ends of the conduits (3) of the uppermost plate (2) and between the ends of the conduits (3) of the bottommost plate (2) and the collector (11).

8. Device according to Claim 1 or one of the following claims, characterized in that the plates (2) are retained by means of vertically arranged struts (1), guided through bores near the longitudinal edges extending parallel to the conduits, and are held at a distance from one another by means of spacer sleeves (4) pushed over the struts (1).

9. Device according to Claim 8, characterized in that at least some of the struts (1) are arranged in oblong holes.

10. Device according to Claim 1 or one of the following claims, characterized in that a leakproof trough (5), preferably made of sheet copper, is arranged underneath the heat exchanger.

**Revendications**

1. Dispositif pour l'utilisation de l'énergie de l'environnement aux fins de chauffage, au moyen d'une installation à pompe à chaleur, dans lequel l'agent operationnel, exposé à l'atmosphère, est chauffé, et éventuellement vaporisé par l'énergie ambiante, et l'énergie ainsi absorbée est utilisée dans le dispositif de pompe à chaleur, l'échangeur de chaleur étant constitué d'au moins deux plateaux en tôle métallique sensiblement horizontaux, superposés, comportant de nombreux canaux pour le passage du fluide opérationnel qui sont en contact avec les plateaux, dispositif caractérisé en ce que les canaux (3) sont intégrés sans soudure, à l'intérieur des plateaux (2) et s'étendent dans le sens de la longueur des plateaux (2), que ces plateaux (2) présentent un bombage dans le sens perpendiculaire aux canaux (3) ou, sont pliés en forme de toit dans le même sens, et/ou sont inclinés sur l'horizontale, et que la distance entre deux plateaux adjacents (2) est à peu près égale en tous points et se monte au moins à 100 mm.

2. Dispositif suivant la revendication 1, caractérisé en ce que l'angle d'inclinaison se situe entre 5 et 25°.

3. Dispositif suivant l'une des revendications 1 et 2, caractérisé en ce que le rayon de courbure du bombage se situe entre 0,5 et 5 m.

4. Dispositif suivant la revendication 1 ou une des suivantes, caractérisé en ce que les zones qui se trouvent entre les canaux (3) des plateaux (2) sont pourvues d'un profilage.

5. Dispositif suivant la revendication 1 ou une des suivantes, caractérisé en ce que les canaux (3) situés au-dessus les uns des autres de deux plateaux (2) sont reliés par des pièces tubulaires (6) et le fluide opérationnel parcourt successivement les canaux (3) placés les uns au-dessus des autres des plateaux (2).

6. Dispositif suivant la revendication 5, caractérisé en ce que le fluide opérationnel est l'agent de refroidissement de la pompe à chaleur, et est fourni par un répartiteur (8) aux canaux (3) du plateau supérieur (2), pour ressortir du plateau inférieur (2) et aller au compresseur en passant par un collecteur (11).

7. Dispositif suivant la revendication 6, caractérisé en ce qu'il est prévu, aussi bien entre le répartiteur (6) et les extrémités des canaux (3) du plateau supérieur (2) qu'entre les extrémités des canaux (3) du plateau inférieur (2) et le collecteur (11), des tuyaux (9, 10) de longueurs égales.

8. Dispositif suivant la revendication 1 ou une des suivantes, caractérisé en ce que les plateaux (2) sont maintenus par des poutres (1), qui passent dans des perforations voisines des bords longitudinaux qui s'étendent parallèlement aux bords, et sont maintenus écartés les uns des autres par des douilles écarteuses (4) poussées sur les poutres.

9. Dispositif suivant la revendication 8, caractérisé en ce qu'au moins certaines des poutres (1) sont placées dans des trous oblongs.

10. Dispositif suivant la revendication 1, ou une des suivantes, caractérisé en ce qu'en-dessous de l'échangeur de chaleur, il est placé une cuve étanche (5), de préférence en tôle de cuivre.